# EUROPEAN PATENT APPLICATION

(11) **EP 1 057 614 A1**
(43) Date of publication of application: **06.12.2000**
(21) Application number: 00830391.9
(22) Date of filing: 31.05.2000
(51) Int. Cl.: B29C 55/06, B29C 35/06

(54) **Apparatus for the heat treatment of plastic material to be stretched**

(30) Priority: 01.06.1999 IT BO990299
(71) Applicant: S.I.M.A. Societa' Industrie Macchine Affini S.r.l., 40056 Crespellano (Bologna) (IT)
(72) Inventor: Barbieri, Contardo, 40135 Bologna (IT)
(74) Representative: Lanzoni, Luciano

(57) **Abstract**

Apparatus (10) for the heat treatment of long plastic elements (12) to be stretched is used, in particular, in machinery for making long plastic elements, in conjunction with a first and a second feed unit located upstream and downstream of it, respectively. The first and second feed units are designed to exert a pulling force on the long elements in such a way that the long elements can be stretched. The heat treatment apparatus (10) comprises a frame (14) that supports first means (16) and second means (18) for exchanging heat with the long elements (12). The apparatus further comprises means for switching between a condition in which the heat treatment is performed on the long elements (12) by the first heat exchanging means (16) and a second condition in which the heat treatment is performed by the second heat exchanging means (18).

## Description

The present invention relates to apparatus for the heat treatment of long elements made of a plastic material. The invention is designed to be used in plastic stretching units in machinery for making long or continuous plastic elements, such as wires or thin strips.

The technical field concerned is that of the processing of plastics starting from feed material in pellet form which is initially extruded through appropriate dies to make long strips of material of suitably shaped cross section depending on the type of end product required. Next, the long material (whose cross section may be circular, polygonal or flattened to varying degrees) is passed through one or more stretching stations where the long material is subjected to plastic deformation by a force applied to it mainly in an axial direction, and to subsequent heat treatments designed to normalise the product.

An integral part of the stretching station is a device known as a "godet" to experts in the trade, which consists of a plurality of horizontal rollers between which the long element is passed. There is a battery of rollers upstream of the godet and another battery of rollers downstream of it, the battery downstream turning at a higher peripheral speed in order to stretch the long material. Between the two batteries, there is always a heating station designed to raise the temperature of the long element to be stretched in order to confer on it the optimum properties required to enable it to be plastically deformed by stretching.

The heating station in current machines comes in two different versions: heat exchange using a source of air (hot air moved by suitable blowers) or heat exchange using a source of liquid (usually water). The choice depends on the substance to be treated, one version being used for HDPE, (high-density polypropylene) and the other for PP (polypropylene). Within the chosen technical solution, the treatment means must then be maintained at the most suitable temperature.

Some machines are used to treat both of the above mentioned types of plastic and are equipped with two ovens (that is, the stations where the product is heated), one of the hot air type and one of the hot water type, which operate alternately. In practice, the two ovens are placed next to each other and when processing is changed from one type of material to the other, the machine has to be stopped for the time necessary to change from one type of oven to the other where the material to be stretched is fed through. This results in significant downtime with all but negligible effects on production costs.

Air heated ovens basically consist of a base covered by a lid. A current of hot air, normally flowing in the same direction as that in which the long material is being fed, is passed through appropriate openings made in the base and lid and circulated in the space between the base and the lid, in contact with the material to be stretched.

In ovens where the product is heated by a liquid medium, on the other hand, the base of the oven acts as a tank for the treatment water which is heated and maintained at the required temperature by heating elements located in the water. The water is kept as still as possible to form a bed of a certain length through which the long element is passed, keeping it completely under but close to the surface of the water.

When another type of product has to be processed, the machine has to be shut down for the length of time required to change over to the oven connected to the stretching station concerned and the resulting downtime has significant effects on production costs. The aim of the present invention is to overcome the above mentioned drawbacks by providing apparatus for the heat treatment of long plastic elements to be stretched, the apparatus being used, in particular, in machinery for making long plastic elements, in conjunction with a first and a second feed unit located upstream and downstream of it, respectively. The first and second feed units are designed to exert a pulling force on the long elements in such a way that the long elements can be stretched. The heat treatment apparatus comprises a frame that supports first means and second means for exchanging heat with the long elements. The apparatus further comprises means for switching between a condition in which the heat treatment is performed on the long elements by the first heat exchanging means and a second condition in which the heat treatment is performed by the second heat exchanging means.

Through the provision, in a product manufacturing machine, of a single heating device capable of treating the material in the form of a long element either by first heat exchanging means suitable for treating a certain type of product, or by second heat exchanging means suitable for treating another type of product, it is possible to use the same production line to treat different types of plastic in an extremely reduced space, with very limited downtime and without using auxiliary equipment.

The secondary claims describe other advantageous aspects of the present apparatus.

The technical characteristics and advantages of the present invention will now be described with reference to the accompanying drawings which illustrate a preferred embodiment of it without restricting the scope of its application and in which:
- Figure 1 is front view, partly in cross section, of a preferred embodiment of the present heat exchanging apparatus in a first working position;
- Figure 2 is front view, partly in cross section, of the preferred embodiment of the present heat exchanging apparatus in a second working position;
- Figure 3 is a longitudinal view, partly in cross section, of a detail from Figure 1;
- Figure 4 is a side view of the preferred embodiment of the heat exchanging apparatus made according to the present invention.

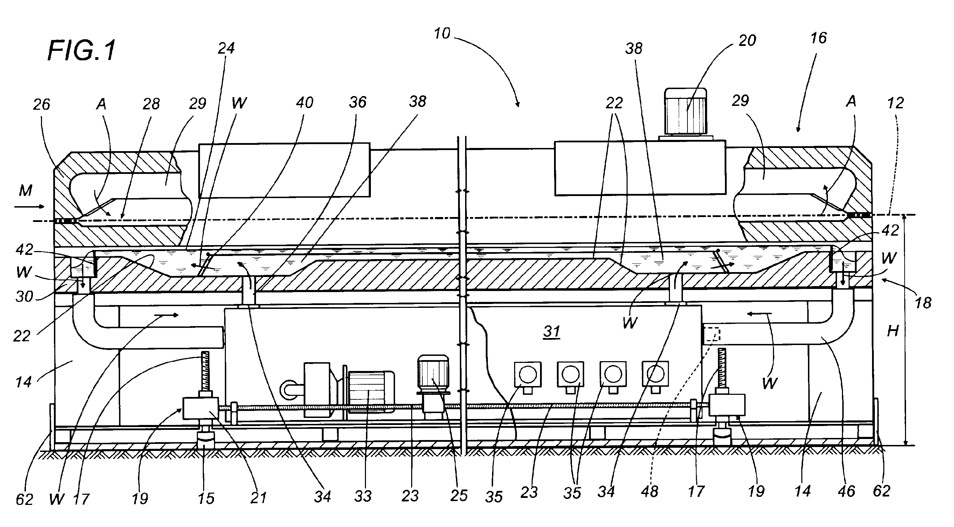

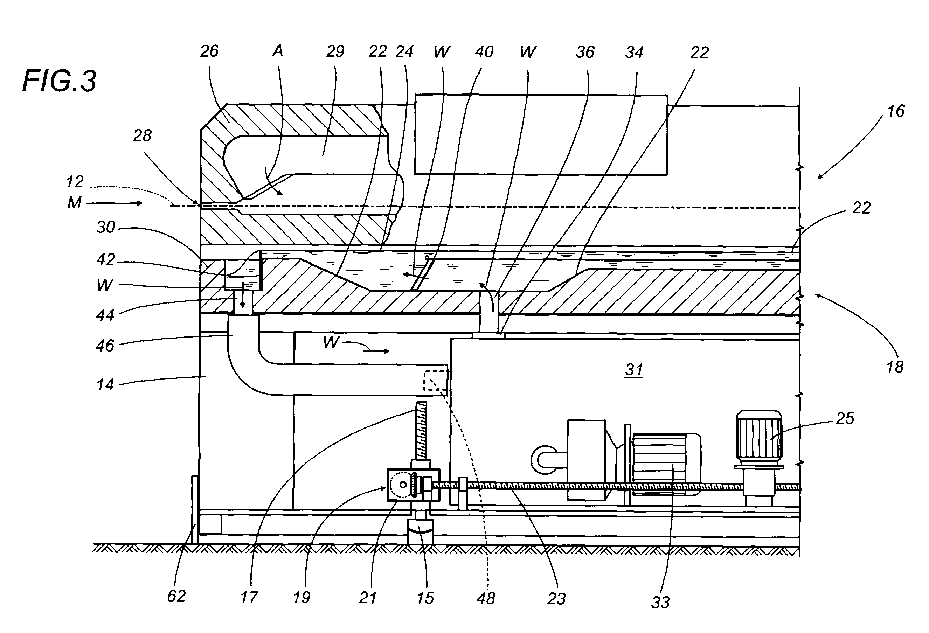

With reference to Figures 1 to 4, a preferred embodiment 10 for the heat treatment of long plastic elements 12 to be stretched comprises, on a supporting frame 14, first means, labelled 16 as a whole, for exchanging heat with the long elements 12, and second means, labelled 18 as a whole, for exchanging heat with the long elements 12.

The present apparatus is used in particular in machines for the production of long plastic elements, in conjunction with a first and a second feed unit located upstream and downstream of it, respectively (which are not illustrated in the accompanying drawings). The first and second feed units are designed to exert a pulling force on the long elements in such a way that the long elements can be stretched.

In particular, the first heat exchanging means 16 are designed to provide contact between the long elements and air as the heat transfer medium. The first means 16 comprise elements designed to circulate the air at a controlled temperature within a channel 28 extending lengthways and open at both ends so that the plastic material to be stretched can be fed in and out. These circulation elements comprise fans, which are not illustrated in the accompanying figures, and whose motor (labelled 20 in the figures) extends above the first heat exchanging means 16. The means for circulating the heat exchanging air cause the air to flow in the direction indicated by the arrows A in the accompanying figures.

The plastic material is fed in the direction indicated by the arrow M in the figures and the first heat exchanging means 16 are made in a first block 26 which forms the longitudinal channel 28 and, above this, a circulation channel 29.

The air flows into the heat exchange channel 28 in the same direction as the long elements 12 are fed into the channel 28.

The temperature is controlled by a probe which senses the temperature of the air inside the channel and accordingly controls appropriate resistors in such a way as to switch air heating on or off. These air temperature control means are not illustrated in the accompanying figures and are of a conventional type well known to experts in the trade.

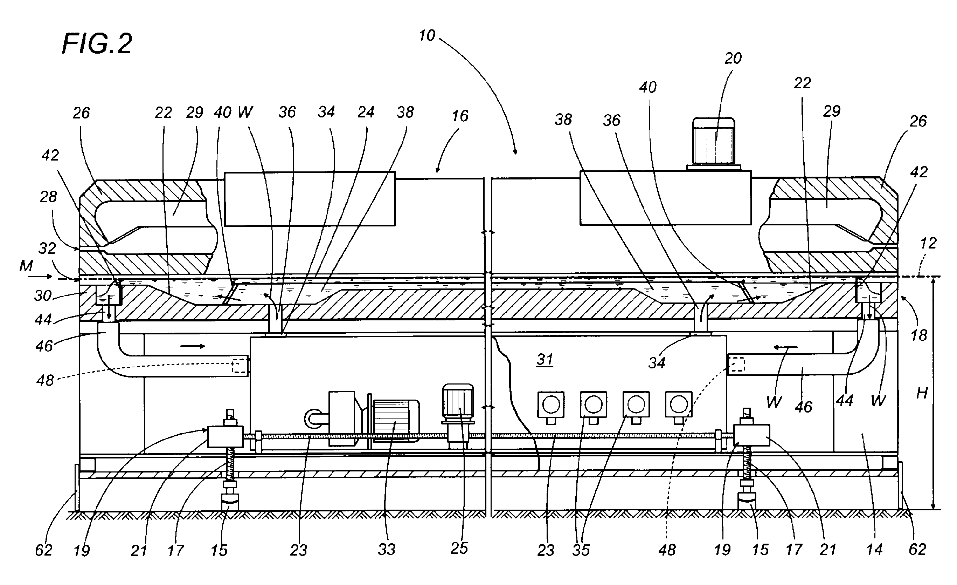

The first block 26 for the first heat exchanging means is located above a second block 30 which comprises, inside it, a tank 22 designed to hold a liquid 24 that is placed in contact (as illustrated in Figure 2) with the long elements 12 so as to transfer heat to the latter in such a way as to form the above mentioned second heat exchanging means 18. In the tank 22, which forms the second heat exchanging means, water is circulated in the direction of the arrows W in the accompanying drawings. The water is heated in a tub 31 mounted on the frame 14 under the second block 30. Inside the tank 31 there are heating elements 35 and means which sense the temperature of the liquid and which issue a signal used by appropriate means for switching the heating elements on and off so as to keep the water at a preset temperature.

These water temperature control means are not illustrated in the accompanying figures and are of a conventional type well known to experts in the trade. The water at the preset temperature, pushed by a pump whose drive motor is labelled 33 in the figures, passes through holes (not illustrated) made in the tub 31. Through appropriate ducts 34, only partially illustrated, the water reaches inlets 36 which channel it into corresponding antechambers 38, made in opposite longitudinal areas of the channel 32, and from there, through corresponding filters 40, into the tank 22. To flow out of the tank, the water flows in contact with vertical plates or sluices 42. Through the outlets 44 and corresponding ducts 46, the water reaches inlets 48 which allow it to flow into the recycling tank 31.

Said sluices 42 are adjustable in height, although this fact is not illustrated in the accompanying figures, so as to control the level of the liquid in the channel according to requirements.

The underside of the first block 26 and the top of the second block 30 form a through channel 32, which comprises the tank 22 for the liquid heat transfer medium 24 and which is open at both ends to allow the long elements 12 to be fed in and fed out. The long material is treated by this liquid by being fully immersed under the surface of the liquid heat transfer medium in the tank 22.

Means are advantageously provided for switching the apparatus between a condition in which the heat treatment is performed on the long elements 12 by the first heat exchanging means 16 and a second condition in which the heat treatment is performed by the second heat exchanging means 18.

These means for switching the heat treatment performed on the long elements 12 between the first heat exchanging means 16 and the second heat exchanging means 18 advantageously comprise means for moving said first and second heat exchanging means between a first and a second working position where the first and second heat exchanging means, respectively, are located at the position where the long elements 12 are stretched between the feed means upstream and downstream of the heat exchanging apparatus.

In practice, in a machine where the present apparatus is fitted, the long material to be stretched is always fed through the stretching section of the machine at the same height, labelled H in Figures 1 and 2.

The means for moving the first and second heat exchanging means 16, 18 between the first and second working positions act by respectively lifting and lowering the first and second means 16, 18 together in such a manner that, starting from a position illustrated in Figure 1 where the upper, air-heated oven works on the long material, the apparatus is lifted to the position illustrated in Figure 2 where the long material is worked on by the water-heated oven.

In the present preferred embodiment, the lifting means raise and lower the entire frame assembly 14 and all the apparatus components mounted on the frame. For this purpose, the lifting means comprise a series of lift/lower screws 17 fixed to corresponding feet 15 resting on the floor, and gear means 19 which are connected to the frame 14 by blocks 21 and which travel up and down the thread of the corresponding screws 17 in such a way as to lift and lower the supporting frame 14.

The lift/lower gears 19 are operatively connected to each other by transmission shafts 23 (only one of which is illustrated in the accompanying figures) so that they can be driven by a single motor 25 mounted on the frame 14. The output shaft of the motor 25 drives the gears through appropriate transmission means which are well known to experts in the trade and which do not therefore need to be illustrated in detail.

The frame 14 comprises means designed to level system, in order to enable the heat exchange apparatus to operate correctly along its entire width and length. These means comprise levels designed to find a horizontal condition. Using the indications provided by the levels, after disengaging the shanks 17 from the gears of the lift/lower system, the operators turn the shanks using appropriate tools such as suitable spanners which can be engaged in the shaped top ends of the shanks, causing minor adjustments in the height of the frame 14 relative to the shanks or screws 17 so as to set a horizontal condition.

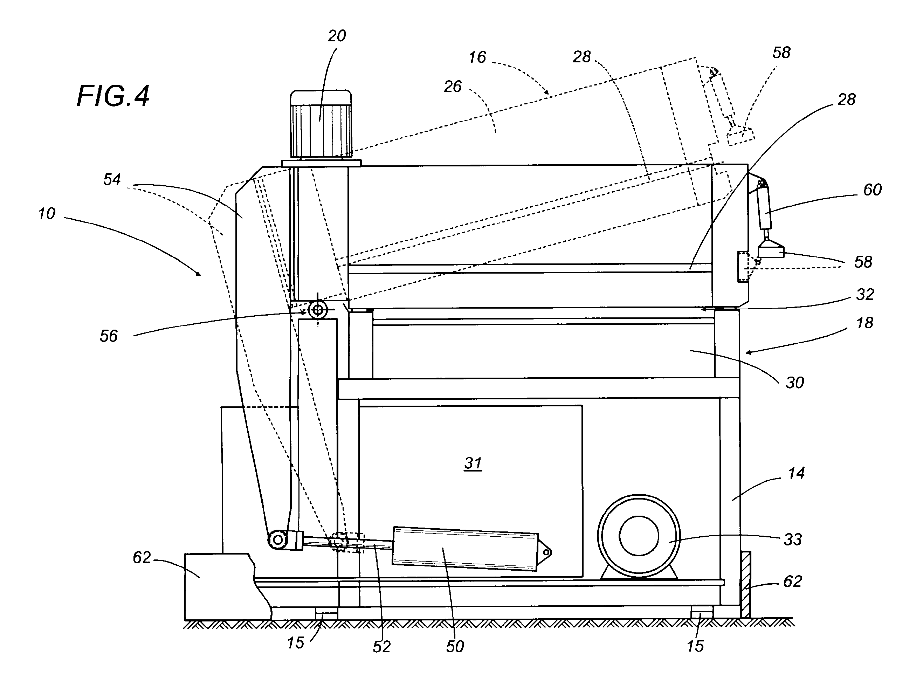

Figure 4 shows that the apparatus further comprises means for moving the first block 26 between a lowered working position and a raised position giving access to the tank 22 for the liquid heat transfer medium 24 so that the liquid medium can reach the correct working level.

The means for moving the first block 26 between a lowered working position and a raised position giving access to the tank are designed to move the first block 26 through a defined angle and comprise at least one pneumatic cylinder 50, fixed to the frame 14, whose extending and retracting stem 52 is fixed to the bottom end of a vertical arm 54 extending from the upper block 16. The first block 26 is pivoted to the frame 14 at 56 and is moved between the lowered position, drawn with a continuous line in Figure 4, where it rests on the lower block 18 and, together with the top of the latter, forms the through channel 32.

To keep the block 26 safely in the raised position, drawn with a broken line in Figure 4, suitable locking and retaining means are provided to prevent the block 26 from turning, said means coming into operation automatically when a microswitch is activated by the block 26 on reaching the required raised position. These locking means are not illustrated in the accompanying figures.

The numeral 58 in Figure 4 indicates a door, mounted by a pneumatic cylinder 60 on the first block 26, designed to close the end of the heat exchanging air channel 28. The door 58 is shown in the open position (continuous line) and in the closed position (broken line) where it plugs the front end of the channel 28. In the figures, the numeral 62 indicates protective skirting mounted on the floor and completely surrounding the supporting frame to avoid hazardous situations by preventing personnel from placing parts of their body under the supporting frame in the space between the underside of the apparatus and the floor. The invention described can be subject to modifications and variations without thereby departing from the scope of the inventive concept. Moreover, all the details of the invention may be substituted by technically equivalent elements.

## Claims

1. Apparatus (10) for the heat treatment of long plastic elements (12) to be stretched used, in particular, in machinery for making long plastic elements, in conjunction with a first and a second feed unit located upstream and downstream of it, respectively, the first and second feed units being designed to exert a pulling force on the long elements in such a way that the long elements can be stretched, the heat treatment apparatus (10) being characterised in that it comprises a frame (14) that supports first means (16) and second means (18) for exchanging heat with the long elements (12), and in that it further comprises means for switching between a condition in which the heat treatment is performed on the long elements (12) by the first heat exchanging means (16) and a second condition in which the heat treatment is performed by the second heat exchanging means (18).

2. The apparatus according to claim 1, characterised in that the first heat exchanging means (16) take the form of means (20) for providing contact between the long elements and air as the heat transfer medium, and in that the second heat exchanging means (18) take the form of a tank (22) containing a liquid (24) that is placed in contact with the long elements (12) so as to transfer heat to the latter.

3. The apparatus according to either of the foregoing claims, characterised in that the means for switching the heat treatment performed on the long elements (12) between the first heat exchanging means (16) and the second heat exchanging means (18) comprise means for moving said first and second heat exchanging means between a first and a second working position where the first and second heat exchanging means, respectively, are located at a position (H) where the long elements (12) are stretched.

4. The apparatus according to claim 3, characterised in that the first heat exchanging means (16) are located above the second heat exchanging means (18).

5. The apparatus according to claim 4, characterised in that the means for moving the first and second heat exchanging means (16, 18) between the first and second working positions act by respectively lifting and lowering the first and second means (16, 18) together.

6. The apparatus according to claim 5, characterised in that the first heat exchanging means (16) consist of a first block (26) forming a longitudinal channel (28) through which the long elements (12) are passed and used to provide heat exchange with air as the heat transfer medium, and in that the second heat exchanging means (18) consist of a second block (30) forming the tank (22) for the liquid heat transfer medium (24); the first block (26) being located above the second block (30) and forming with the latter a channel (32) in which the long elements (12) pass through the liquid transfer medium (24).

7. The apparatus according to claim 6, characterised in that it comprises means for moving the first block (26) between a lowered working position and a raised position giving access to the tank (22) for the liquid heat transfer medium (24).

8. The apparatus according to claim 7, characterised in that the means for moving the first block (26) between a lowered working position and a raised position giving access to the tank (22) are designed to move the first block (26) through a defined angle.

9. The apparatus according to any of the foregoing claims from 5 to 8, characterised in that the means for lifting and lowering the first and second heat exchanging means (16, 18) act by lifting and lowering the supporting frame (14) relative to the feet (15) by which it rests on the floor.

10. The apparatus according to claim 9, characterised in that the means for lifting and lowering the first and second heat exchanging means (16, 18) comprise a lift/lower screw (17) fixed to a corresponding foot (15) resting on the floor, and gear means (19) which are connected to the frame (14) and which travel up and down the thread of the corresponding screw (17) in such a way as to lift and lower the supporting frame (14).

11. The apparatus according to claim 10, characterised in that the lift/lower gears (19) are operatively connected to each other at the feet (15) so that they can be driven by a single motor mounted on the frame (14).

12. The apparatus according to claim 10, characterised in that the lift/lower screws (17) are used to level at least the tank (22) for the liquid heat transfer medium.

13. The apparatus according to any of the foregoing claims characterised in that it comprises protective skirting (62) mounted on the floor and completely surrounding the supporting frame (14) to close the space between the underside of the frame (14) and the floor.
